(19) Europäisches Patentamt
European Patent Office
Office européen des brevets

(11) **EP 2 447 911 B1**

(12) **EUROPEAN PATENT SPECIFICATION**

(45) Date of publication and mention
of the grant of the patent:
**28.12.2016 Bulletin 2016/52**

(51) Int Cl.:
***G06T 5/00*** *(2006.01)*

(21) Application number: **11187172.9**

(22) Date of filing: **28.10.2011**

(54) **Medical Image Noise Reduction based on Weighted Anisotropic Diffusion**

Rauschunterdrückung bei medizinischen Bildern basierend auf gewichteter anisotroper Diffusion

Réduction de bruit dans des images médicales sur la base de diffusion anisotropique ponderée

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.10.2010 US 913796**
**13.10.2011 JP 2011226114**

(43) Date of publication of application:
**02.05.2012 Bulletin 2012/18**

(73) Proprietor: **Toshiba Medical Systems Corporation Otawara-shi, Tochigi-ken 324-8550 (JP)**

(72) Inventors:
• **Yang, Zhi**
**Vernon Hills, Illinois 60061 (US)**
• **Silver, Michael D.**
**Vernon Hills, Illinois 60061 (US)**

(74) Representative: **Moreland, David et al Marks & Clerk LLP Aurora 120 Bothwell Street Glasgow G2 7JS (GB)**

(56) References cited:
• **ZHI YANG ET AL: "Adaptive Weighted Anisotropic Diffusion for Computed Tomography Denoising", 11TH INTERNATIONAL MEETING ON FULLY THREE-DIMENSIONAL IMAGE RECONSTRUCTION IN RADIOLOGY AND NUCLEAR MEDICINE, FULLY3D, 11 July 2011 (2011-07-11), pages 210-213, XP55019216,**
• **SCHARR ET AL: "Image statistics and anisotropic diffusion", PROCEEDINGS OF THE EIGHT IEEE INTERNATIONAL CONFERENCE ON COMPUTER VISION. (ICCV). NICE, FRANCE, OCT. 13 - 16, 2003; [INTERNATIONAL CONFERENCE ON COMPUTER VISION], LOS ALAMITOS, CA : IEEE COMP. SOC, US, 13 October 2003 (2003-10-13), pages 840-847VOL.2, XP031213134, ISBN: 978-0-7695-1950-0**

**Description**

Embodiments described herein relate generally to a medical imaging apparatus having a denoising function and a medical image processing method.

BACKGROUND

As x-ray computed tomography (CT) achieves higher resolution, noise has been a significant problem from the inception of CT imaging. A major concern in developing a denoising technique is to preserve clinically significant living body tissue structures of interest. In this regard, although low-pass filtering techniques are well-known effective denoising filters, the processed images tend to lose clinically significant living body tissue structures. That is, low-pass filtering techniques generally remove high-frequency components from an image (e.g., an x-ray CT image) in order to improve the detectability of large structures in the image. On the other hand, the low-pass filters smooth edges (areas where pixel values abruptly change) in the image, thereby decreasing the detectability of living body tissue structures. For this reason, the low-pass filters reduce the intrinsic resolution of the image.

Some improvements have been made to the low-pass filtering techniques. For example, an improved technique of some prior art low-pass filters averages voxels in local neighborhoods which are determined as areas where no edge locally exists upon determination. Other improved prior art low-pass filtering techniques are based upon the iteratively estimated standard deviation of noise in a particular local position of CT volume for performing a weighted average between neighboring voxels. These noise reduction methods are not particularly aimed at preserving specific living body tissue structures of interest.

In contrast, a recent x-ray CT denoising approach involves an anisotropic diffusion filter as a denoising filter whose diffusion coefficient is made image dependent. Living body tissue structures of certain images can be directionally smoothed with an anisotropic diffusion filter. Exemplary x-ray CT image noise reduction methods using anisotropic diffusion filters smooth living body tissue structures such as elongated-shaped vessels only in the directions along edges.

Despite computationally complex implementation, anisotropic smoothing techniques have gained attention to reduce noise while preserving living body tissue structures of interest. While some prior art anisotropic smoothing techniques improved in preserving small living body tissue structures of interest in image data, these prior art techniques undesirably require to determine an area for which no filtering is performed, which indicates potentially relevant living body tissue structures that should be preserved. Anisotropic diffusion denoising methods and systems thus remain desired to be improved in preserving clinically significant living body tissue structures in reconstructed images using a variety of modalities including CT and more broadly, multi-dimensional signals.

Scharr et al "Image statistics and anisotropic diffusion", Proceedings of the Eight IEEE International Conference on Computer Vision (ICCV), Nice, France, October 13-16, 2003, pages 840-847 Vol. 2, XP031213134, ISBN: 978-0-7695-1950-0 describes anisotropic diffusion schemes.

According to an aspect of the present invention there is provided a medical imaging method as recited in Claim 1.

According to an aspect of the present invention there is provided a medical imaging apparatus as recited in Claim 10.

BRIEF DESCRIPTION OF THE DRAWINGS

The invention can be more fully understood from the following detailed description when taken in conjunction with the accompanying drawings, in which:

FIG. 1 is a diagram illustrating an x-ray computed topographic imaging system according to an embodiment;
FIG. 2 is a flow chart illustrating exemplary steps involved in the adaptively weighted anisotropic diffusion (AWAD) method or process according to this embodiment;
FIG. 3A is a diagram illustrating an intensity level corresponding to gradient and Laplacian for a certain sharp edge according to this embodiment;
FIG. 3B is a diagram illustrating an intensity level corresponding to gradient and Laplacian for a certain slow edge according to this embodiment;
FIG. 4A is a view illustrating an example of an original reconstructed image before adaptively weighted anisotropic diffusion is applied to it according to this embodiment;
FIG. 4B is a view illustrating an example of a diffused image generated by adaptively weighted anisotropic diffusion according to this embodiment; and
FIG. 4C is a view illustrating an example of a diffused image generated by adaptively weighted sharp source anisotropic diffusion according to this embodiment.

DETAILED DESCRIPTION

In general, according to one embodiment, in an image processing apparatus including an anisotropic diffusion unit 131 and a weight generation unit 132.

The anisotropic diffusion unit 131 executes anisotropic diffusion for medical image data constituted by a plurality of signal values.

The weight generation unit 132 generates a plurality of weights respectively corresponding to the plurality of signal values based upon the medical image data.

The anisotropic diffusion unit 131 repeatedly executes the anisotropic diffusion for the medical image data a plurality of number of iterations by using the weights.

This embodiment is not limited to an x-ray computed tomographic imaging system (to be referred to as an x-ray CT hereinafter). For example, the embodiment can be applied to other medical image diagnostic apparatuses such as a magnetic resonance imaging apparatus (to be referred to as an MRI hereinafter) and an ultrasonic diagnostic apparatus. A medical imaging apparatus incorporated in an x-ray CT will be exemplified. Note that the embodiment is not limited to medical image diagnostic apparatuses and is broadly applicable to medical imaging apparatuses as single apparatuses, medical image diagnostic apparatuses from which multi-dimensional signals can be obtained, and the like.

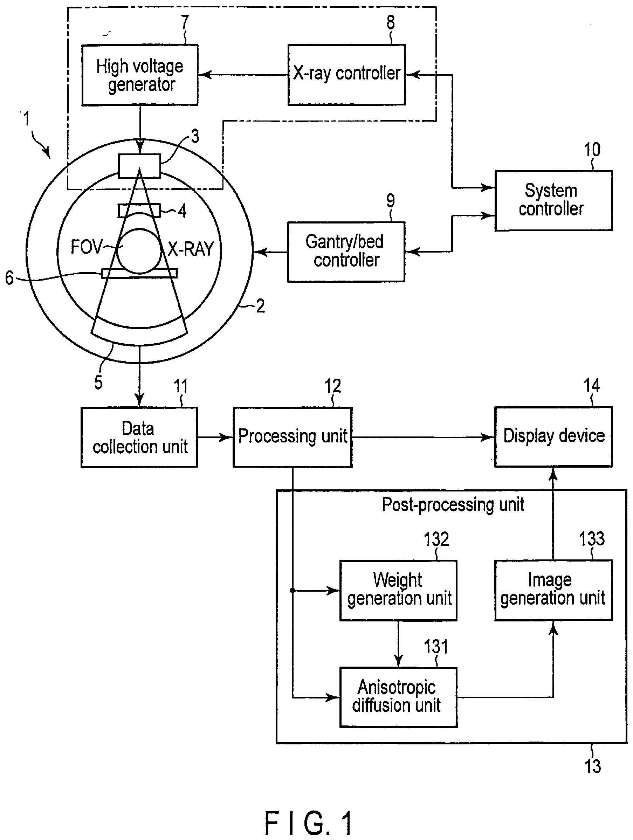

FIG. 1 is a diagram illustrating the arrangement of an x-ray computed topographic imaging system according to this embodiment. The projection data measurement system includes a gantry 1, which accommodates an x-ray tube 3 and a two-dimensional array type x-ray detector 5. The x-ray tube 3 and the two-dimensional array type x-ray detector 5 are mounted on a rotating ring 2 so as to face each other through a subject. The subject is placed on a sliding bed 6. The rotating ring 2 rotates about a predetermined rotational axis. At this time, the bed moves on the sliding bed 6 along the rotational axis at a predetermined speed. A gantry/bed controller 9 synchronously controls the revolution of the rotating ring 2 and the linear movement of the sliding bed 6. Projection data (medical image data) is collected while the x-ray tube 3 travels either a helical trajectory relative to the sliding bed 6 during a helical data acquisition or a circular trajectory relative to the sliding bed 6 during a circular data acquisition.

The x-ray tube 3 emits an x-ray flux in a certain configuration such as a cone-beam that is directed onto the subject through an x-ray filter 4. An x-ray controller 8 supplies a trigger signal to a high voltage generator 7, which applies high voltage to the x-ray tube 3 upon receiving the trigger signal. Furthermore, a system controller 10 exerts an overall control over both the x-ray controller 8 and the gantry/bed controller 9 so that x-rays are emitted continuously or intermittently at fixed angular intervals from the x-ray tube 3 while the rotating ring 2 is rotated at a predetermined moving speed and the sliding bed 6 is moved at a predetermined speed.

X-rays that have passed through the subject are detected as electrical signals by the two-dimensional array type x-ray detector 5. In the x-ray detector 5, a plurality of detector elements are arranged in one dimensional row, and a plurality of the rows are bundled to construct a two-dimensional array. In certain situation, each detector element corresponds to one channel. A data collection unit 11 amplifies the output signal from the two-dimensional array type x-ray detector 5 for each channel and converts to a digital signal so as to produce projection data.

A processing unit 12 performs various processing tasks upon the projection data. For example, the processing unit 12 performs on the projection data desired operation including but not limited to data sampling and shifting, filtering, backprojection and reconstruction.

The processing unit 12 backprojects the projection data in the image domain according to a predetermined algorithm. In general, the backprojected data is weighted by a distance factor. The distance factor is inversely proportional to the distance L from the x-ray tube 3 position to the reconstructed pixel. The distance factor can be proportional to $1/L$ or $l/L^2$. It is also possible to arbitrarily apply the redundancy of the weighted additional data during the backprojection processing for each pixel. Backprojection processing generally obtains data value (backprojection data) of each pixel existing on a ray connecting the x-ray generator and the light-receiving element of the detector. Note that this process can be done in a variety of ways.

The processing unit 12 determines backprojection data reflecting the x-ray absorption in each voxel (three-dimensional pixel) in a 3D imaging reconstruction. In a circular scanning system using a cone-beam of x-rays, the imaging region (effective field of view) is of cylindrical shape of radius R centered on the axis of revolution. The processing unit 12 defines a plurality of voxels in this imaging region and finds the backprojection data for each voxel. The three-dimensional image data or tomographic image data is compiled based upon the backprojection data, and the processing unit 12 or other units perform tasks associated with denoising of the reconstructed image data. Finally, a display device 14 displays a three-dimensional image, reconstructed tomographic image according to the three-dimensional image data, or the image generated by an image generation unit 133 (to be described later).

A post-processing unit 13 in this embodiment performs noise reduction in the 3-D attenuation map (volume data), the reconstructed image, or the like. Note that the post-processing unit 13 may perform noise reduction for projection data or a signal value (e.g., raw data) associated with projection data. Volume data or a reconstructed image are formed from the above measurement or projection data. In general, the image quality of reconstructed x-ray CT images is expected to improve if noise is reduced on and around certain structures provided that the resolution of these living body tissue structures is at least preserved. Clinically significant living body tissue structures in x-ray CT images include both large living body tissue structures and small living body tissue structures. For example, the large living body tissue structures (to be referred to as large structures hereinafter) include the bones, the aorta and liver while the small living body tissue structures (to be referred to as small structures hereinafter) include the small vessels, calcifications, and bronchi.

The post-processing unit 13 includes the anisotropic diffusion unit 131, the weight generation unit 132, and the image generation unit 133. The anisotropic diffusion unit 132 performs adaptively weighted anisotropic diffusion (to be referred to as AWAD hereinafter) on the reconstructed images or volume data so as to preserve the relevant living body tissue structures of various sizes or edges around the structures and noise. This anisotropic diffusion makes it possible to reduce the noise around both large and small structures while preserving the edges of these structures. Furthermore, the AWAD has some advantages in association with the small structures by reducing the noise while preserving the edges. Although many existing prior art anisotropic diffusion techniques can reduce noise in and around large or relatively slow varying living body tissue structures, the AWAD can bring substantial details of the image back into the diffused image especially for the small structures.

To understand how to apply AWAD in this embodiment, a general concept of anisotropic diffusion is first described with respect to the following equations. Anisotropic diffusion is as an extension of the linear diffusion equation by adding a directionally dependent conduction coefficient D as defined in Equation (1a) below. For the sake of descriptive convenience, assume that anisotropic diffusion is to be executed for the voxel values of volume data. Note that anisotropic diffusion may be executed for the pixel values of reconstructed images or the signal values of raw data.

$$\frac{\partial u}{\partial t} = \nabla \bullet \left( D(u) \nabla u \right) \qquad \text{(1a)}$$

where "●" represents the inner product of two vectors (V and D(u)∇(u)) and D is a diffusion coefficient. The following is a general interpretation of Equation (1a). Here, u is a function dependent on three-dimensional coordinates in volume data, time, and (x, y, z, t). That is, u corresponds to a scalar field (voxel value field) dependent on three-dimensional coordinates and time. More specifically, u is a function (to be referred to as a voxel value function hereinafter) for defining a voxel value defined by a position (three-dimensional coordinates) and time. Note that the derivative corresponds to a voxel value difference. The following will describe equations with u being regarded as a voxel value function.

The voxel value of the voxel value function u is diffused over time t, where the diffusion is steered by the diffusion tensor D(u) that is based upon a gradient (Vu) of the voxel value function u or local image geometry (voxel value function geometry). The diffusion coefficient D is a diffusion tensor dependent on a voxel value function. The left-hand side of Equation (1a) states that a change in voxel value function (a change in voxel value intensity) is equal to the divergence of the product of the diffusion tensor and the gradient of the voxel value function. Equation (1a) holds for each voxel. As indicated by $\partial u/\partial t$, the anisotropic diffusion indicates that the voxel value function u changes over the iteration time t.

In discrete time format, anisotropic diffusion is defined as follows in Equations (1b) and (1c) to explicitly indicate its iterative nature over time:

$$\frac{u(t_{n+1}) - u(t_n)}{t_{n+1} - t_n} = \nabla \bullet (D \nabla u(t_n)) \qquad \text{(1b)}$$

$$u(t_{n+1}) = u(t_n) + (t_{n+1} - t_n)\left[ \nabla \bullet (D \nabla u(t_n)) \right] \qquad \text{(1c)}$$

where u is the processed or diffused voxel value function, $u(t_0)$ is a voxel value function for n = 0, which is a voxel value function before the execution of anisotropic diffusion, more specifically, the voxel value of volume data before the execution of anisotropic diffusion, and $t_n$ and $t_{n+1}$ are respectively the time instances at iteration n and n+1.

As described above, the anisotropic diffusion such as defined in Equations (1a) to (1c) require that a voxel value in volume data is a function of both space and time. Thus, Equation (2) defines the voxel value function $u_0$ in volume data before anisotropic diffusion. The voxel value function $u_0$ is a voxel value function $v_0$ (to be referred to as an initial voxel value function hereinafter) at predetermined time t=0. Here, $u_0$ is included in reference medical image data.

$$u(x,y,z,t)_{t=0} = u_0 \qquad (2)$$

where x, y, and z respectively indicate voxel coordinates in the space in which, for example, volume data is defined. Similarly, Equation (3) defines any voxel value function u, which in turn defines each voxel value function u at a predetermined time $t \neq 0$.

$$u(x,y,z,t)_{t \neq 0} = u \qquad (3)$$

where x, y, and z respectively indicate voxel coordinates in the space in which, for example, volume data is defined. In other words, Equation (2) defines volume data at initial time t = 0 while Equation (3) defines volume data at a subsequent time.

Furthermore, Equation (4) defines the Neumann boundary condition which means that the derivative at the boundary is 0 and therefore avoids the input/output of a voxel value (energy loss) at the boundary during the diffusion process.

$$\partial_n u = 0, \quad \left( \frac{\partial u}{\partial x_n} = 0 \right) \qquad (4)$$

The diffusion coefficient D is a function of a parameter s as defined in Equations (5a) and (6).

$$D(s) = \frac{1}{1+(s/k)^2} \qquad (5a)$$

$$s = \left| \nabla(G_\sigma u) \right| \qquad (6)$$

where s is the magnitude of a local gradient of the smoothed voxel value function u. As denoted by $G_\sigma u$, the voxel value function u is smoothed by a Gaussian filter G with a standard deviation $\sigma$. k is a threshold or a predetermined value. If the magnitude of the local gradient s at a give pixel is smaller than the predetermined threshold value k, the pixel value is treated as noise. On the other hand, if the magnitude of the local gradient at a given pixel is larger than the predetermined threshold value k, the pixel value is treated as a signal for the structures of interest such as lines or edges.

The predetermined threshold value k is determined based upon the following Equations (5b) and (5c):

$$k = k_0 d \qquad (5b)$$

Generally, $k_0$ is set to a predetermined number in Equation (5b). The predetermined number is, for example, 2. Note that k may be 1, while d is determined as follows in Equation (5c).

d = average of the gradient magnitude (5c) Since the local magnitude of gradient s in Equation (5a) is varying from pixel to pixel, the local magnitude of gradient s is a function of spatial positions. The average of the gradient magnitude defined in (5c) is a single number for one volume data.

The above described anisotropic diffusion generally works sufficiently well to reduce noise in and around large or relatively slow varying living body tissue structures.

To counterbalance the diffusing or smoothing effects on the volume data during the denoising method using anisotropic diffusion, anisotropic diffusion in this embodiment incorporates a properly weighted source term (inhomogeneous term). The properly weighted source term is applied to each instance of iteration and accordingly adjusts the diffused voxel value for each instance of iteration. This approach is contrasted to weighting the diffused voxel value at the completion of the iterative anisotropic diffusion. Consequently, the denoising method of this embodiment using adaptively weighted anisotropic diffusion adds voxel values associated with a lost detailed living body tissue structure in the image before anisotropic diffusion to the diffused voxel values during some instances of iteration of the anisotropic diffusion process in order to preserve clinically significant living body tissue structures in volume data.

The above defined anisotropic diffusion is executed by an anisotropic diffusion filter in the anisotropic diffusion unit 131 in this embodiment. The above defined anisotropic diffusion is also used in an anisotropic diffusion step in the embodiment. In either case, the anisotropic diffusion is repeatedly executed. That is, the diffused voxel value function u is obtained for a current instance of iteration, and the currently evaluated diffused voxel value function u, will be used as a previous diffused voxel value function u(t - 1), in a next instance of iteration.

For each instance of iteration, the anisotropic diffusion unit 131 in this embodiment further adds, to the result obtained by executing anisotropic diffusion, an inhomogeneous term that multiplies, by a weight, the difference between the voxel value function at the current instance and the voxel value function before the anisotropic diffusion filter is applied. By the same token, a step in the anisotropic diffusion method or process according to this embodiment adds, to the result obtained by executing anisotropic diffusion, an inhomogeneous term that multiplies, by a weight, the difference between the voxel value function at the current instance and the initial voxel value function before the application of the anisotropic diffusion filter.

The adaptive weight term (inhomogeneous term) has been incorporated in Equations (7a), (7b), and (7c) given below which express the adaptive weighted anisotropic diffusion (AWAD) which is performed in each of a plurality of steps according to this embodiment.

$$\frac{\partial u}{\partial t} = \nabla \bullet (D\nabla u) + W(u - u_0)$$

(7a)

where W is an adaptive weight element (to be referred to as a weight hereinafter) in the inhomogeneous term. In discrete time format, Equation (7a) is arbitrarily defined as in Equations (7b) and (7c) as follows:

$$\frac{u(t_{n+1}) - u(t_n)}{t_{n+1} - t_n} = \nabla \bullet (D\nabla u(t_n)) + W(u(t_n) - u_0)$$

(7b)

$$u(t_{n+1}) = u(t_n) + (t_{n+1} - t_n)\left[\nabla \bullet (D\nabla u(t_n)) + W(u(t_n) - u_0)\right]$$

(7c)

The following descriptions of Equations (7a), (7b), and (7c) will be focused on the inhomogeneous term since the basic concept of anisotropic diffusion has been already described with respect to Equations (1a), (1b), and (1c). The weight generation unit 132 in the post-processing unit 13 generates the weight W used in Equations (7a), (7b), and (7c). The weight generation unit 132 generates an edge map based upon the initial voxel value function (volume data before anisotropic diffusion). The weight generation unit 132 generates a weight corresponding to the coordinates of a voxel based upon the edge map. The weight W multiplies the temporally caused difference between the original voxel value function before any anisotropic diffusion and the result of the voxel value function after the anisotropic diffusion. In Equation (7a), the above difference is expressed as $(u - u_0)$. In the discrete time format in Equations (7b) and (7c), the same difference is expressed by $(u(t_n) - u_0)$.

The weight W in Equations (7a), (7b), and (7c) is implemented as time-variant or time-invariant while it is also spatially variant. In the following example as defined in Equation (8), the weight W is optionally illustrated as a time-invariant term. As defined in Equation (8), the weight term W is evaluated as a normalized value between 0 and 1.

$$W = 1 - e^{-|L(x,y,z)|}$$

(8)

where L is a predetermined edge map of the original voxel value function $u_0$. In generation of one exemplary edge map, Laplacian of Gaussian is used. In other exemplary implementations, the edge map is produced by other edge detection methods such as Sobel edge detection (gradient of Gaussian), Curvature edge detection method or a combination of these known edge detection methods. For example, a Sobel edge detection method is given in following two filtering masks as defined in Matrixes (8a):

$$\begin{pmatrix} -1 & -2 & -1 \\ 0 & 0 & 0 \\ 1 & 2 & 1 \end{pmatrix}, \begin{pmatrix} -1 & 0 & 1 \\ -2 & 0 & 2 \\ -1 & 0 & 1 \end{pmatrix} \tag{8a}$$

In one exemplary embodiment using Laplacian of Gaussian as defined in Equations (9) and (10), the edge map based upon Laplacian of smoothed original voxel value function $u_0$ based upon the Laplacian $\Delta u_0$ has certain advantage in simplicity and detecting sharper edges and its transit band. The transit band of edges is an area where a voxel value changes with a change in the degree of appearance of edges. Furthermore, the edge map based upon the Laplacian $\Delta u_0$ of the smoothed original voxel value function $\Delta u_0$ reduces the slow-changed boundaries and uniform regions to zero-mean or near zero-mean.

$$L(x, y, z) = \Delta u_s(x, y, z) \tag{9}$$

$$u_s(x, y, z) = u_0(x, y, z) \otimes h(p, q, r) \tag{10}$$

where $u_S$ is the smoothed version of the original voxel value function $u_0$ by a smoothing kernel h(p, q, r), which is optionally a simple running average filter or a Gaussian weighted smoothing filter.

A simple running average filter or a Gaussian weighted smoothing filter are formulated in the following Equations (11a) and (11b):

$$h(p, q, r) = \frac{1}{z} \Pi\left(\frac{p}{\tau_p}\right) \Pi\left(\frac{q}{\tau_q}\right) \Pi\left(\frac{p}{\tau_r}\right) \tag{11a}$$

$$h(p, q, r) = \frac{1}{Z} exp\left(-\frac{p^2}{2\sigma_p^2} - \frac{q^2}{2\sigma_q^2} - \frac{r^2}{2\sigma_r^2}\right) \tag{11b}$$

where $\tau$ is the length of the running average filter and $\sigma$ is the size parameter for Gaussian filters.

As described above, an inhomogeneous term is added to the anisotropically diffused voxel value function. The inhomogeneous term is the product of the normalized weight value W and the temporally caused difference between the voxel value functions. This difference is the difference between the original voxel value function before any diffusion and the voxel value function after the current anisotropic diffusion instance in iteration. In other words, this embodiment and the steps in the embodiment properly add the inhomogeneous term to the voxel value function at every instance of iteration instead of adding a weight at the completion of the iterative process.

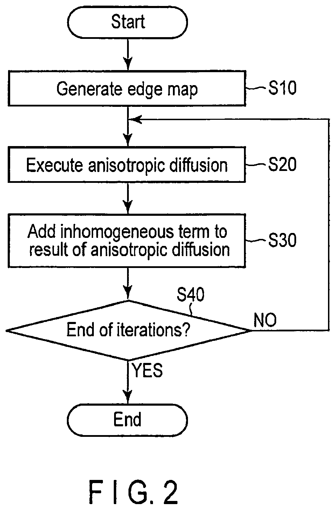

Now referring to FIG. 2, a flowchart illustrates exemplary steps involved in the AWAD method or process. The following sets or tasks are performed by the above described embodiments including the processing unit 12 and the post-processing unit 13. The AWAD method or process are not limited to these steps illustrated in the flowchart.

In one exemplary process of the AWAD, step S10 generates an edge map of the original voxel value function before any iteration of AWAD. Some aspects of the edge map generation have been previously described with respect to Equations (8a), (9), (10), (11a), and (11b). The weight generation unit 132 stores the weights generated based upon an edge map at each instance of the iteration associated with AWAD. In the above described example, the edge map generation is space-dependent but is time-invariant. That is, although the weight value is determined for a given voxel as specified by a set of coordinates in the coordinate system set for volume data. Note that the weight value is not varying for the given pixel or voxel over time in one embodiment. In another embodiment, to make weights both spatially and temporary dependent, the edge map may generate weights based upon the voxel value function generated for each iteration.

Step S10 also involves some pre-processing associated with the original voxel value function before the edge detection. As described above with respect to Equations (10), (11a) and (11b), an original voxel value function $u_0$ is smoothed by a smoothing kernel such as h(p, q, r).

Lastly, step S10 generates an edge map of certain characteristics. While the generated edge map provides the weight values used in the inhomogeneous term in anisotropic diffusion (to be referred to as a weighting step hereinafter), certain characteristics of particular edge detection generally determine the weight values to be applied in the weighting step. For this reason, a selected edge detector partially affects an ultimate outcome of the AWAD process. The edge detection includes a variety of methods such as gradient map, Laplacian, curvature, Eigen values of structural tensors and Hessian matrices. The edge detection may be executed based upon a combination of the above detection method.

Still referring to FIG. 2, step S20 performs a predetermined anisotropic diffusion process on each voxel value of data. An exemplary step of the anisotropic diffusion process has been previously described with respect to Equations (1a), (1b), (1c), (2), (3), (4), (5a), (5b), (5c), and (6).

In step S30, the anisotropic diffusion process adds the inhomogeneous term to the diffused result in step S20. Addition of the inhomogeneous term to the result of diffusion in step S20 is accomplished by tasks associated with Equations (7a), (7b), (7c), and (8). Equations (7a), (7b), and (7c) include terms associated with the anisotropic diffusion process itself and the inhomogeneous terms. Although steps S20 and S30 are illustrated as two sequential steps in the exemplary flowchart, the AWAD process is implemented in a variety of ways. In an alternative embodiment or process, steps S20 and S30 are optionally implemented as simultaneous steps that may be performed in parallel. In any case, regardless of a particular implementation, in step S30, the inhomogeneous term is added to the diffused result in step S20 for each instance of the iteration. Equation (8) defines the normalized weight value W based upon the edge map that has been generated in step S10.

As mentioned before with respect to step S30, the AWAD process is iteratively performed in one preferred process. In this regard, step S40 determines as to whether or not the AWAD process in steps S20 and S30 should be terminated. If step S40 determines that the AWAD process in steps S20 and S30 should be terminated, the illustrative steps end its process. On the other hand, if step S40 determines that the adaptive weighted anisotropic diffusion in steps S20 and S30 should not be terminated, the illustrative steps continue its process by iteratively performing steps S20 and S30. As described with respect to Equations (7a), (7b), and (7c), the current voxel value function u(t + 1) is now assigned to a previously diffused image result u(t) in the current instance of the iteration before a next instance of the iteration is performed.

In an alternative embodiment, step S30 has an optional step of applying a predetermined sharp filter. Equations (12) and (13) define a process of adaptive weighted sharp source anisotropic diffusion (AWSSAD).

$$\frac{\partial u}{\partial t} = \nabla \bullet (D\nabla u) + W(S(u_0) - u) \tag{12}$$

where $S(u_0)$ is the sharpened version $u_0$ using a predetermined unsharpened voxel value function as defined in Equation (13).

$$S(u_0) = \left( \frac{w}{2w-1}u_0 - \frac{1-w}{2w-1}u \right) \tag{13}$$

where w is a parameter of an unsharp filter. At w = 0.8, reasonably good results have been obtained. The anisotropic diffusion unit 131 adds, to the result of the current anisotropic diffusion, the inhomogeneous term that multiplies, by a weight, the difference between the current voxel value function and the sharpened voxel value function, of the voxel value functions used for anisotropic diffusion executed by a predetermined number of iterations. This sharpens edges after anisotropic diffusion.

Step S40 determines as to whether or not the AWAD or AWSSAD process should be further iteratively performed based upon a predetermined set of termination conditions. Commonly, there are two ways to determine the number of iterations or the conditions for termination: One termination is based upon comparing the mean-square-errors between current iteration result and previous iteration result. If the difference is smaller than a preset termination value, the processing stops. The other termination is based upon a predetermined noise assessment tool to determine a noise level at each instance of the iteration. If the current noise level is reduced by a preset noise reduction goal such as a 50% noise level from the original, the iteration stops.

The anisotropic diffusion unit 131 stores a predetermined time scale t. The anisotropic diffusion unit 131 executes AWAD or AWSSAD processing at specific time intervals $\Delta t$ to calculate a voxel value function $u(t_{n+1})$ based upon a voxel value function $u(t_n)$ associated with the previous iteration. The number of iterations in AWAD or AWSSAD processing is given by $t/\Delta t$. The specific time interval $\Delta t$ is determined by Inequality (14) for the stability of iterations of processing.

$$\Delta t < 1/(2N) \tag{14}$$

where N is the number of dimensions of data to be subjected to anisotropic diffusion. If, for example, data to be subjected to anisotropic diffusion is volume data, since the number of dimensions of the volume data is 3, N = 3. Note that if data to be subjected to anisotropic diffusion is two-dimensional image data such as a reconstructed image, since the number of dimensions of the two-dimensional image data is 2, N = 2. Based upon Equation (14), the value of $\Delta t$, which limits the upper bound of the step size. If the step size $\Delta t$ is too small, the adaptive weighted anisotropic diffusion process substantially slows down the overall denoising process. In one embodiment, the step size $\Delta t$ is set approximately between 1/4 - 1 of the upper bound. For example, the step size $\Delta t$ takes a value such as 1/8, 1/12 or 1/16 for N=3 in denoising the 3D reconstructed images.

The image generation unit 133 generates an edge-enhanced or sharpened medical image with reduced noise based upon the image data (volume data) processed by the anisotropic diffusion unit 131.

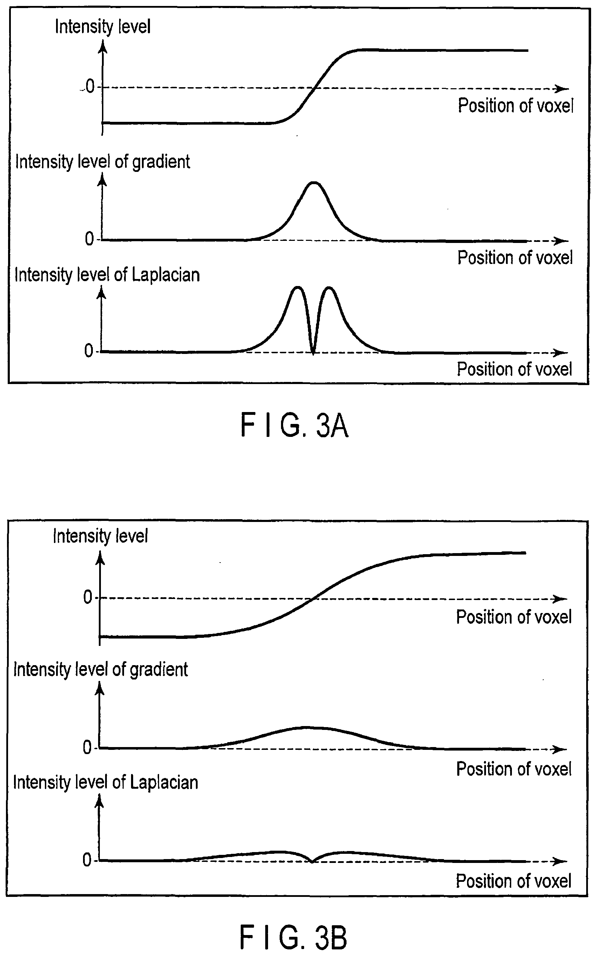

FIGS. 3A and 3B illustrate an intensity level corresponding to gradient and Laplacian for sharp and slow edges. The intensity level is, for example, a voxel value, pixel value, or signal value. As described above with respect to step S10, an edge map is generated with certain characteristics according to particular edge detection. In this regard, selected edge detection partially affects an ultimate outcome of the AWAD or AWSSAD process. An edge map is generated to emphasize small or sharp edges rather than thick or slow-varying edges or boundaries. One advantage of the AWAD or AWSSAD is to retain small edges while the images are denoised. For this purpose, the weight generation unit 132 generates an edge map by using Laplacian.

FIG. 3A illustrates an intensity level corresponding to gradient and Laplacian for a certain sharp edge. A top graph illustrates an intensity level of an exemplary sharp edge. The intensity changes quickly across the zero intensity level. A middle graph illustrates a gradient level that corresponds to the top exemplary sharp edge. The gradient is at the highest level when the edge changes its intensity level from a negative value to a positive value at zero. A bottom graph illustrates an intensity level of Laplacian, which is a second order derivative in one dimensional case. For a rising edge or a falling edge of the exemplary sharp edge, a first order derivative gives either a positive upward bump or a negative downward bump. The peak or valley of the bump is the place where the first order derivative is at maximum in absolute value. The peak or valley of the first order derivative is actually the zeroes in second order derivative, and at two sides of the zeros, there are two bumps (one positive and one negative) in second order derivative or Laplacian. In one embodiment, an absolute value of the second derivative is selected as the weight at edges so that more weight is given to the pixels within the band along the edges to preserve the edge information. Although the Laplacian weight at edge is zero, the edge pixels are substantially preserved by the anisotropic diffusion process. Only sharp edges have larger Laplacian values, and these edges are substantially preserved by using Laplacian weight values.

FIG. 3B illustrates an intensity level corresponding to gradient and Laplacian for a certain slow edge. A top graph illustrates an intensity level of an exemplary slow edge. The intensity changes slowly across the zero intensity level in comparison to the top graph in FIG. 3A. A middle graph illustrates a gradient level that corresponds to the top exemplary slow edge. The gradient also changes slowly and with a less intensity level when the edge changes its intensity level from a negative value to a positive value at zero. A bottom graph illustrates an intensity level of Laplacian, which shows almost no change in the intensity level. In contrast to a sharp edge, slow varying edges or large edges having thick boundaries generally have small Laplacian values compared to the noise. For this reason, Laplacian is substantially ignored in one embodiment.

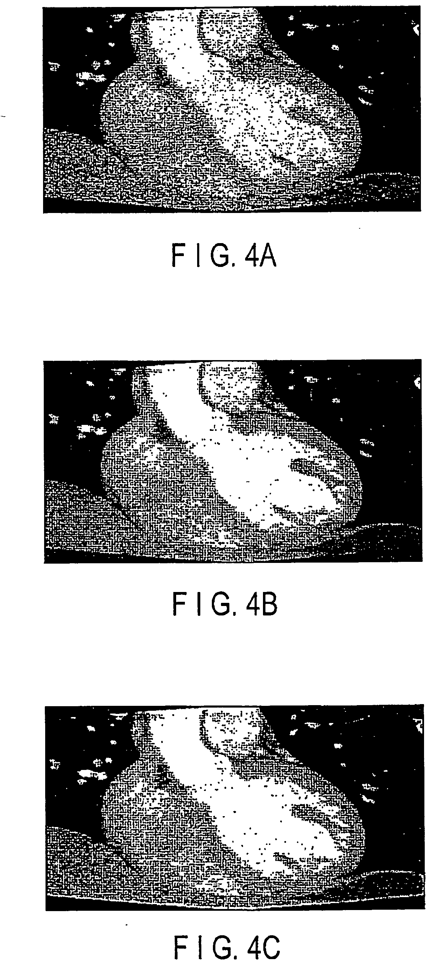

FIGS. 4A, 4B, and 4C are views each illustrating an example of the image generated by the image generation unit 133. FIGS. 4B and 4C illustrate some effects of the adaptively weighted anisotropic diffusion. FIG. 4A is an original reconstructed image before the adaptively weighted anisotropic diffusion is applied. FIG. 4B shows a resulted diffused image that has gone through the adaptively weighted anisotropic diffusion (AWAD) according to the current invention using a threshold coefficient = 2 with number of iterations = 4 and step size = 1/8. Note that 2 may be used as a threshold.

FIG. 4C shows a resulted diffused image that has gone through the adaptively weighted sharp source anisotropic diffusion (AWSSAD) according to the current invention using threshold coefficient = 2 with number of iterations = 13, step size = 1/8 and w = 0.8. Note that 2 may be used as a threshold.

In summary, this embodiment can generate a weight for each pixel or voxel by using the edge map generated based upon data (image data such as volume data or reconstructed image data) before the execution of AWAD or AWSSAD processing. It is then possible to add, to the result obtained by executing current anisotropic diffusion, an inhomogeneous term that multiplies, by a weight, the difference between image data before anisotropic diffusion and the result of the current anisotropic diffusion for each anisotropic diffusion repeatedly executed by a predetermined number of iterations. That is, the embodiment applies a negative feedback mechanism to adjust the edge and texture features in a reconstructed image based upon the information in the original image so that the final result is a balanced, converged and featured image at a reduced level of noise. That is, it is possible to generate an image in which noise is reduced and the detailed structure of the living body tissue is preserved (an edge-enhanced image or edge-sharpened image).

In addition, according to this embodiment, it is possible to select edge detection in accordance with image data before anisotropic diffusion. This makes it possible to perform edge detection suitable for the image data before anisotropic diffusion. In addition, the embodiment allows to set the number of iterations in accordance with the dimension of image data before anisotropic diffusion. This optimizes the processing time of anisotropic diffusion. Note that when the technical idea of the embodiment is to be implemented by a medical image diagnostic apparatus, the medical image diagnostic apparatus is characterized by the post processing unit 13 including the anisotropic diffusion unit 131, the weight generation unit 132, and the image generation unit 133.

While certain embodiments have been described, these embodiments have been presented by way of example only, and are not intended to limit the scope of the invention as defined by the appended claims.

**Claims**

1. A medical imaging method comprising:

   executing anisotropic diffusion (S20) for medical image data comprising a plurality of signal values, each signal value corresponding to coordinates in a space; and
   generating a plurality of weights, wherein the weight for each signal value depends on an edge value corresponding to the coordinates of the respective signal value,

   wherein the anisotropic diffusion is repeatedly executed for the medical image data by using the weights by a predetermined number of iterations, using an inhomogeneous anisotropic nonlinear filter, and
   an inhomogeneous term in the inhomogeneous anisotropic nonlinear filter is a term that multiplies a difference between reference medical image data and medical image data smoothed by the anisotropic diffusion by the weights respectively corresponding to the signal values.

2. The method of claim 1, **characterized in that** the inhomogeneous anisotropic nonlinear filter is given by

$$u(t_{n+1}) = u(t_n) + (t_{n+1} - t_n)\big[\nabla \bullet (D\nabla u(t_n)) + W(u(t_n) - u_0)\big]$$

   where $u(t_{n+1})$ is a signal value at the (n + 1)th iteration, $u(t_n)$ is a signal value at the nth iteration, $u_0$ is an initial signal value before application of the inhomogeneous anisotropic nonlinear filter, and W is a weight corresponding to the initial signal value.

3. The method of claim 1, **characterized in that** the medical image data comprises volume data, and the signal value comprises a voxel value.

4. The method of claim 1, **characterized in that** the reference medical image data comprises medical image data before application of the anisotropic diffusion.

5. The method of claim 1, **characterized in that** the weights are generated using Laplacian edge detection.

6. The method of claim 1, **characterized in that** the weights are generated using Sobel edge detection.

7.  The method of claim 1, **characterized in that** the weights are generated using curvature edge detection.

8.  The method of claim 1, **characterized in that** the weight is invariant in the anisotropic diffusion repeated by the predetermined number of iterations.

9.  The method of claim 1, **characterized in that** the medical image data comprises medical image data smoothed in advance before the anisotropic diffusion.

10. A medical imaging apparatus **characterized by** comprising:

> an anisotropic diffusion unit (131) configured to execute anisotropic diffusion for medical image data comprising a plurality of signal values, each signal value corresponding to coordinates in a space; and
> a weight generation unit (132) configured to generate a plurality of weights wherein the weight for each signal value depends on an edge value corresponding to the coordinates of the respective signal value,
> wherein the anisotropic diffusion unit repeatedly executes the anisotropic diffusion for the medical image data by using the weights by a predetermined number of iterations, wherein the anisotropic diffusion unit is further configured to execute the anisotropic diffusion using an inhomogeneous anisotropic nonlinear filter, and
> an inhomogeneous term in the inhomogeneous anisotropic nonlinear filter is a term that multiplies a difference between reference medical image data and medical image data smoothed by the anisotropic diffusion by the weights respectively corresponding to the signal values.

11. The apparatus of claim 10, **characterized in that** the inhomogeneous anisotropic nonlinear filter is given by

$$u(t_{n+1}) = u(t_n) + (t_{n+1} - t_n)\left[\nabla \bullet (D\nabla u(t_n)) + W(u(t_n) - u_0)\right]$$

where $u(t_{n+1})$ is a signal value at the $(n + 1)$th iteration, $u(t_n)$ is a signal value at the nth iteration, $u_0$ is an initial signal value before application of the inhomogeneous anisotropic nonlinear filter, and W is a weight corresponding to the initial signal value.

12. The apparatus of claim 10, **characterized in that** the medical image data comprises volume data, and the signal value comprises a voxel value.

13. The apparatus of claim 10, **characterized in that** the reference medical image data comprises medical image data before application of the anisotropic diffusion.

14. The apparatus of claim 10, **characterized in that** the weight generation unit is further configured to generate the weights by using Laplacian edge detection.

15. The apparatus of claim 10, **characterized in that** the weight generation unit is further configured to generate the weights by using Sobel edge detection.

16. The apparatus of claim 10, **characterized in that** the weight generation unit is further configured to generate the weights by using curvature edge detection.

17. The apparatus of claim 10, **characterized in that** the weight is invariant in the anisotropic diffusion repeated by the predetermined number of iterations.

18. The apparatus of claim 10, **characterized in that** the medical image data comprises medical image data smoothed in advance before the anisotropic diffusion.

19. The apparatus of claim 10, **characterized in that** the reference medical image data comprises medical image data sharpened based upon medical image data before the anisotropic diffusion and a predetermined parameter.

20. The apparatus of claim 19, **characterized in that** the sharpened medical image data is given by

$$S(u_0) = \left( \frac{w}{2w-1} u_0 - \frac{1-w}{2w-1} u \right)$$

where $S(u_0)$ is a signal value of the sharpened medical image data, $u_0$ is an initial signal value before application of the inhomogeneous anisotropic nonlinear filter, u is a signal value at the nth iteration, and w is the predetermined parameter.

21. The apparatus of claim 10, **characterized in that** the anisotropic diffusion unit is further configured to store a predetermined time scale,
the anisotropic diffusion is executed at a specific time interval, and
the predetermined number is a number obtained by multiplying the time scale by the specific time interval.

22. The apparatus of claim 21, **characterized in that** the specific time interval is smaller than a reciprocal of twice the number of dimensions of the medical image data.

**Patentansprüche**

1. Medizinisches Bildgebungsverfahren mit den Schritten:

Ausführen einer anisotropen Diffusion (S20) für medizinische Bilddaten mit einer Mehrzahl von Signalwerten, wobei jeder Signalwert zu Koordinaten in einem Raum gehört, und
Erzeugen einer Mehrzahl von Gewichten, wobei das Gewicht für jeden Signalwert von einem Kantenwert abhängt, der zu den Koordinaten des entsprechenden Signalwerts gehört,

wobei die anisotrope Diffusion für die medizinischen Bilddaten wiederholt ausgeführt wird unter Verwendung der Gewichte mit einer vorbestimmten Anzahl von Iterationen, wobei ein inhomogener anisotroper nichtlinearer Filter verwendet wird, und
ein inhomogener Term in dem inhomogenen anisotropen nichtlinearen Filter ein Term ist, der einen Unterschied zwischen medizinischen Referenzbilddaten und durch die anisotrope Diffusion geglättete medizinischen Bilddaten mit den jeweiligen Gewichten multipliziert, die zu den Signalwerten gehören.

2. Verfahren nach Anspruch 1, **dadurch gekennzeichnet, dass** der inhomogene anisotrope nichtlineare Filter gegeben ist durch

$$u(t_{n+1}) = u(t_n) + (t_{n+1} - t_n)[\nabla \bullet (D\nabla u(t_n)) + W(u(t_n) - u_0)]$$

wobei $u(t_{n+1})$ ein Signalwert bei der (n + 1)-ten Iteration, $u(t_n)$ ein Signalwert bei der n-ten Iteration, $u_0$ ein Anfangssignalwert vor der Anwendung des inhomogenen anisotropen nichtlinearen Filters und W ein Gewicht, das zu dem Anfangssignalwert gehört, ist.

3. Verfahren nach Anspruch 1, **dadurch gekennzeichnet, dass** die medizinischen Bilddaten Volumendaten umfassen und die Signalwerte Voxelwerte umfassen.

4. Verfahren nach Anspruch 1, **dadurch gekennzeichnet, dass** die medizinischen Referenzbilddaten medizinische Bilddaten vor der Anwendung der anisotropen Diffusion umfassen.

5. Verfahren nach Anspruch 1, **dadurch gekennzeichnet, dass** die Gewichte unter Verwendung einer Laplace-Kantendetektion erzeugt sind.

6. Verfahren nach Anspruch 1, **dadurch gekennzeichnet, dass** die Gewichte unter Verwendung einer Sobel-Kantendetektion erzeugt sind.

7. Verfahren nach Anspruch 1, **dadurch gekennzeichnet, dass** die Gewichte unter Verwendung einer Krümmungskantendetektion erzeugt sind.

8. Verfahren nach Anspruch 1, **dadurch gekennzeichnet, dass** das Gewicht invariant in der anisotropen Diffusion, die die vorbestimmte Anzahl von Iterationen wiederholt wird, ist.

9. Verfahren nach Anspruch 1, **dadurch gekennzeichnet, dass** die medizinischen Bilddaten medizinische Bilddaten umfassen, die im Voraus vor der anisotropen Diffusion geglättet sind.

10. Medizinische Bildgebungsvorrichtung mit:

> einer anisotropen Diffusionseinheit (131), die dazu ausgebildet ist, eine anisotrope Diffusion für medizinische Bilddaten mit einer Mehrzahl von Signalwerten auszuführen, wobei jeder Signalwert zu Koordinaten im Raum gehört, und
> einer Gewichtungserzeugungseinheit (132), die dazu ausgebildet ist, eine Mehrzahl von Gewichten zu erzeugen, wobei das Gewicht für jeden Signalwert von einem Kantenwert abhängt, der zu den Koordinaten des jeweiligen Signalwerts gehört,

> wobei die anisotrope Diffusionseinheit wiederholt die anisotrope Diffusion für die medizinischen Bilddaten unter Verwendung der Gewichte in einer vorbestimmten Anzahl von Iterationen ausführt, wobei die anisotrope Diffusionseinheit ferner dazu ausgebildet ist, die anisotrope Diffusion unter Verwendung eines inhomogenen anisotropen nichtlinearen Filters auszuführen, und
> ein inhomogener Term in dem inhomogenen anisotropen nichtlinearen Filter ein Term ist, der einen Unterschied zwischen medizinischen Referenzbilddaten und medizinischen Bilddaten, die durch die anisotrope Diffusion geglättet wurden, mit den jeweiligen Gewichten, die zu den Signalwerten gehören, multipliziert.

11. Vorrichtung nach Anspruch 10, **dadurch gekennzeichnet, dass** der inhomogene anisotrope nichtlineare Filter gegeben ist durch

$$u(t_{n+1}) = u(t_n) + (t_{n+1} - t_n)\left[\nabla \bullet \left(D\nabla u(t_n)\right) + W\left(u(t_n) - u_0\right)\right]$$

wobei $u(t_{n+1})$ ein Signalwert bei der (n + 1)-ten Iteration, $u(t_n)$ ein Signalwert bei der n-ten Iteration, $u_0$ ein Anfangssignalwert vor der Anwendung des inhomogenen anisotropen nichtlinearen Filters und W ein Gewicht, das zu dem Anfangssignalwert gehört, ist.

12. Vorrichtung nach Anspruch 10, **dadurch gekennzeichnet, dass** die medizinischen Bilddaten Volumendaten umfassen und der Signalwert einen Voxelwert umfasst.

13. Vorrichtung nach Anspruch 10, **dadurch gekennzeichnet, dass** die medizinischen Referenzbilddaten medizinische Bilddaten vor der Anwendung der anisotropen Diffusion umfassen.

14. Vorrichtung nach Anspruch 10, **dadurch gekennzeichnet, dass** die Gewichterzeugungseinheit ferner dazu ausgebildet ist, die Gewichte unter Verwendung einer Laplace-Kantendetektion zu erzeugen.

15. Vorrichtung nach Anspruch 10, **dadurch gekennzeichnet, dass** die Gewichterzeugungseinheit ferner dazu ausgebildet ist, die Gewichte unter Verwendung einer Sobel-Kantendetektion zu erzeugen.

16. Vorrichtung nach Anspruch 10, **dadurch gekennzeichnet, dass** die Gewichterzeugungseinheit ferner dazu ausgebildet ist, die Gewichte unter Verwendung einer Krümmungskantendetektion zu erzeugen.

17. Vorrichtung nach Anspruch 10, **dadurch gekennzeichnet, dass** das Gewicht invariant in der anisotropen Diffusion ist, welche mit der vorbestimmten Anzahl von Iterationen wiederholt wird.

18. Vorrichtung nach Anspruch 10, **dadurch gekennzeichnet, dass** die medizinischen Bilddaten medizinische Bilddaten umfassen, die im Voraus vor der anisotropen Diffusion geglättet sind.

19. Vorrichtung nach Anspruch 10, **dadurch gekennzeichnet, dass** die medizinischen Referenzbilddaten medizinische Bilddaten, die basierend auf medizinischen Bilddaten vor der anisotropen Diffusion geschärft wurden, und einen vorbestimmten Parameter umfassen.

**20.** Vorrichtung nach Anspruch 19, **dadurch gekennzeichnet, dass** die geschärften medizinischen Bilddaten gegeben sind durch

$$S(u_0) = \left( \frac{w}{2w-1} u_0 - \frac{1-w}{2w-1} u \right)$$

wobei $S(u_0)$ ein Signalwert der geschärften medizinischen Bilddaten ist, $u_0$ ein Anfangssignalwert vor der Anwendung des inhomogenen anisotropen nichtlinearen Filters ist, und u ein Signalwert der n-ten Iteration ist und w der vorbestimmte Parameter ist.

**21.** Vorrichtung nach Anspruch 10, **dadurch gekennzeichnet, dass** die anisotrope Diffusionseinheit ferner dazu ausgebildet ist, eine vorbestimmte Zeitskala zu speichern,
die anisotrope Diffusion zu einem spezifischen Zeitintervall ausgeführt wird und
die vorbestimmte Anzahl eine Anzahl ist, die durch Multiplizieren der Zeitskala mit dem spezifischen Zeitintervall erhalten wird.

**22.** Vorrichtung nach Anspruch 21, **dadurch gekennzeichnet, dass** das spezifische Zeitintervall kleiner ist als ein reziproker Wert der doppelten Anzahl von Dimensionen der medizinischen Bilddaten.

**Revendications**

**1.** Procédé d'imagerie médicale comprenant :

l'exécution d'une diffusion anisotropique (S20) pour des données d'images médicales comprenant une pluralité de valeurs de signaux, chaque valeur de signal correspondant à des coordonnées dans un espace ; et
la génération d'une pluralité de poids, le poids de chaque valeur de signal étant fonction d'une valeur de contour correspondant aux coordonnées de la valeur de signal respective,

dans lequel la diffusion anisotropique est exécutée à plusieurs reprises pour les données d'images médicales en utilisant les poids selon un nombre prédéterminé d'itérations, à l'aide d'un filtre non linéaire anisotrope et non homogène, et
un terme non homogène dans le filtre non linéaire anisotrope et non homogène est un terme qui multiplie une différence entre des données d'images médicales de référence et des données d'images médicales lissées par la diffusion anisotropique selon les poids correspondant respectivement aux valeurs de signaux.

**2.** Procédé selon la revendication 1, **caractérisé en ce que** le filtre non linéaire anisotrope et non homogène est donné par la formule

$$u(t_{n+1}) = u(t_n) + (t_{n+1} - t_n)\left[ \nabla \bullet (D\nabla u(t_n)) + W(u(t_n) - u_0) \right]$$

où $u(t_{n+1})$ est une valeur de signal à la $(n+1)^{\text{ème}}$ itération, $u(t_n)$ est une valeur de signal à la $n^{\text{ième}}$ itération, $u_0$ est une valeur de signal initiale avant l'application du filtre non linéaire anisotrope et non homogène, et W est un poids correspondant à la valeur de signal initiale.

**3.** Procédé selon la revendication 1, **caractérisé en ce que** les données d'images médicales comprennent des données de volume et la valeur de signal comprend une valeur de voxel.

**4.** Procédé selon la revendication 1, **caractérisé en ce que** les données d'images médicales de référence comprennent des données d'images médicales avant l'application de la diffusion anisotropique.

**5.** Procédé selon la revendication 1, **caractérisé en ce que** les poids sont générés au moyen d'une détection de contour laplacien.

6. Procédé selon la revendication 1, **caractérisé en ce que** les poids sont générés au moyen d'une détection de contour de Sobel.

7. Procédé selon la revendication 1, **caractérisé en ce que** les poids sont générés au moyen d'une détection de contour de courbure.

8. Procédé selon la revendication 1, **caractérisé en ce que** le poids est invariant dans la diffusion anisotropique répétée selon le nombre prédéterminé d'itérations.

9. Procédé selon la revendication 1, **caractérisé en ce que** les données d'images médicales comprennent des données d'images médicales lissées à l'avance avant l'application de la diffusion anisotropique.

10. Appareil d'imagerie médicale **caractérisé en ce qu'**il comprend :

   une unité de diffusion anisotropique (131) conçue pour exécuter une diffusion anisotropique pour des données d'images médicales comprenant une pluralité de valeurs de signaux, chaque valeur de signal correspondant à des coordonnées dans un espace ; et
   une unité de génération de poids (132) conçue pour générer une pluralité de poids, le poids de chaque valeur de signal étant fonction d'une valeur de contour correspondant aux coordonnées de la valeur de signal respective,

   dans lequel l'unité de diffusion anisotropique exécute à plusieurs reprises la diffusion anisotropique pour les données d'images médicales en utilisant les poids selon un nombre prédéterminé d'itérations, l'unité de diffusion anisotropique étant conçue en outre pour exécuter la diffusion anisotropique à l'aide d'un filtre non linéaire anisotrope et non homogène, et
   un terme non homogène dans le filtre non linéaire anisotrope et non homogène est un terme qui multiplie une différence entre des données d'images médicales de référence et des données d'images médicales lissées par la diffusion anisotropique selon les poids correspondant respectivement aux valeurs de signaux.

11. Appareil selon la revendication 10, **caractérisé en ce que** le filtre non linéaire anisotrope et non homogène est donné par la formule

$$u(t_{n+1}) = u(t_n) + (t_{n+1} - t_n)\big[\nabla \bullet (D\nabla u(t_n)) + W(u(t_n) - u_0)\big]$$

où $u(t_{n+1})$ est une valeur de signal à la $(n+1)^{\text{ème}}$ itération, $u(t_n)$ est une valeur de signal à la $n^{\text{ième}}$ itération, $u_0$ est une valeur de signal initiale avant l'application du filtre non linéaire anisotrope et non homogène, et W est un poids correspondant à la valeur de signal initiale.

12. Appareil selon la revendication 10, **caractérisé en ce que** les données d'images médicales comprennent des données de volume et la valeur de signal comprend une valeur de voxel.

13. Procédé selon la revendication 10, **caractérisé en ce que** les données d'images médicales de référence comprennent des données d'images médicales avant l'application de la diffusion anisotropique.

14. Appareil selon la revendication 10, **caractérisé en ce que** l'unité de génération de poids est conçue en outre pour générer les poids en utilisant la détection de contour laplacien.

15. Appareil selon la revendication 10, **caractérisé en ce que** l'unité de génération de poids est conçue en outre pour générer les poids en utilisant la détection de contour de Sobel.

16. Appareil selon la revendication 10, **caractérisé en ce que** l'unité de génération de poids est conçue en outre pour générer les poids en utilisant la détection de contour de courbure.

17. Appareil selon la revendication 10, **caractérisé en ce que** le poids est invariant dans la diffusion anisotropique répétée selon le nombre prédéterminé d'itérations.

**18.** Appareil selon la revendication 10, **caractérisé en ce que** les données d'images médicales comprennent des données d'images médicales lissées à l'avance avant la diffusion anisotropique.

**19.** Appareil selon la revendication 10, **caractérisé en ce que** les données d'images médicales de référence comprennent des données d'images médicales affinées en fonction de données d'images médicales avant la diffusion anisotropique et d'un paramètre prédéterminé.

**20.** Appareil selon la revendication 19, **caractérisé en ce que** les données d'images médicales affinées sont données par la formule

$$S(u_0) = \left( \frac{w}{2w-1} u_0 - \frac{1-w}{2w-1} u \right)$$

où $S(u_0)$ est une valeur de signal des données d'images médicales affinées, $u_0$ est une valeur de signal initiale avant l'application du filtre non linéaire anisotrope et non homogène, $u$ est une valeur de signal à la $n^{ième}$ itération, et $w$ est le paramètre prédéterminé.

**21.** Appareil selon la revendication 10, **caractérisé en ce que** l'unité de diffusion anisotropique est conçue en outre pour stocker une échelle de temps prédéterminée,
la diffusion anisotropique est exécutée à un intervalle de temps spécifique, et
le nombre prédéterminé est un nombre obtenu en multipliant l'échelle de temps par l'intervalle de temps spécifique.

**22.** Appareil selon la revendication 21, **caractérisé en ce que** l'intervalle de temps spécifique est inférieur à la réciproque du double du nombre de dimensions des données d'images médicales.

F I G. 1

```
          ┌───────────┐
          │   Start   │
          └───────────┘
                │
                ▼
    ┌───────────────────────────┐
    │     Generate edge map     │──S10
    └───────────────────────────┘
                │
                ▼
    ┌───────────────────────────┐
    │  Execute anisotropic      │──S20
    │  diffusion                │
    └───────────────────────────┘
                │
                ▼
    ┌───────────────────────────┐
    │  Add inhomogeneous term to│──S30
    │  result of anisotropic    │
    │  diffusion                │
    └───────────────────────────┘
                │
                ▼      S40
            ◇─────────────────◇
            │ End of iterations?│──NO
            ◇─────────────────◇
                │ YES
                ▼
          ┌───────────┐
          │    End    │
          └───────────┘
```

# F I G. 2

F I G. 3A

F I G. 3B

F I G. 4A

F I G. 4B

F I G. 4C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SCHARR et al.** Image statistics and anisotropic diffusion. *Proceedings of the Eight IEEE International Conference on Computer Vision (ICCV),* 13 October 2003, vol. 2, ISBN 978-0-7695-1950-0, 840-847